# EUROPEAN PATENT APPLICATION

(11) **EP 4 362 251 A1**
(43) Date of publication of application: **01.05.2024**
(21) Application number: 22306624.2
(22) Date of filing: 26.10.2022
(51) Int. Cl.: H02G 1/12

(54) **SHEATH STRIPPING APPARATUS AND METHOD**

(71) Applicant: Nexans, 92400 Courbevoie (FR)
(72) Inventor: FENEIS, Michael, 92685 Floss (DE); STEINBERG, Helmut, 92685 Floss (DE); LINDNER, Gerhard, 92685 Floss (DE)
(74) Representative: Ipsilon

(57) **Abstract**

Apparatus and method for removing an insulating layer of a cable. The apparatus comprises a cutting assembly with an adjustable cutting tool rotating around a cable to perform a circumferential cut into an insulating layer. The cutting assembly comprises a control unit for controlling an incision depth of the cutting assembly into the insulating layer. A sensor detects a distance between an outer surface of the insulating layer and an adjacent conducting component. The control unit of the cutting assembly utilizes the sensor data describing the measured distance for dynamically adjusting the incision depth of the cutting tool while the cutting assembly rotates around the cable.

## Description

### Field

The present disclosure relates to a sheath stripping apparatus and a method for stripping the sheath of a cable especially shielded cables, containing an electrical or light conductor.

### Background

Shielded individual electrical cables are used, for example, in the automotive sector to connect electrical units and components with each other. To save material and weight, there is a general trend towards ever higher operating voltages, which allow smaller cable cross sections. This applies in particular to vehicles with purely electric drive or with hybrid drive. In such vehicles, devices and consumers of electric power are therefore increasingly supplied from current sources with increased voltages. The electric cabling in such vehicles can be designed for voltages of up to 1000 V. Because of the high operating voltages, individual cables with an electrically effective screen are often used to connect consumers to a battery. When the power from the battery needs to be distributed to multiple consumers the conductor as well as the screen of the electric cables need to be connected. To that end, an external sheath of the electric cables needs to be stripped to provide access to the conductor and the screen of the electric cable. When the sheath is stripped off, it is of major importance that the screen is not damaged to ensure a proper shielding of the electric fields caused by the high voltages applied to the conductor. Conventional stripping machines use knives to cut into the sheath with a predetermined incision depth that depends on the type of cable that needs to be stripped. Typically, the incision depth is adjusted such that the cutting edges of the knives cut the sheath of the cable only almost completely. For instance, the cutting edges are adjusted to not cut into a remaining thickness of 0.1 mm of the sheath adjacent to the screen.

DE 40 33 315 C1 discloses a method and an apparatus for stripping off a sheath of an electrical cable. The knives are adjustable by a control means. The control means monitors a capacitance between cutting knives and the screen or conductor. In this way it can be detected when the cutting knives cut into the screen of the electric cable. For a next working step, the position of the cutting knives is adjusted to no more get in contact with the screen. However, DE 40 33 315 C1 does not suggest how the incision depth of the cutting knives is to be adjusted to ensure that the sheath is incised deep enough enabling proper stripping of the sheath. This is all the more a disadvantage when the thickness of the sheath varies in circumferential direction of the cable. For example, it could occur that the sheath of the cable is incised so deeply that the cutting edge of the knives are already in touch with the screen of the cable at one circumferential position. However, at another circumferential position the knives do not cut deeply enough to enable stripping off the sheath properly. As a result, the quality of the stripped cable may not be satisfactory.

In view of the limitations of existing methods for stripping the sheath of a cable, there remains a desire for a method and apparatus to overcome or at least improve one or more of the problems mentioned at the outset.

### Summary

According to a first aspect the present disclosure suggests an apparatus comprising an adjustable cutting assembly rotating around a cable to perform a circumferential cut into an insulating layer. The cutting assembly comprises a control unit, a sensor, an actuator, and a cutting tool. The control unit controls an incision depth of the cutting tool into the insulating layer. A sensor detects a distance between an outer surface of the insulating layer and an adjacent conducting component. The control unit utilizes the sensor data describing the measured distance for dynamically adjusting the incision depth of the cutting tool while the cutting assembly rotates around the cable.

The insulating layer may be a sheath or inner insulator of cable and the conducting component may be a screen or a conductor, wherein the conductor can be a light conductor or an electrical conductor. The apparatus advantageously permits to continuously adjust the incision depth of the cutting assembly and maintain a predefined thickness of the insulating layer intact. In this way it is assured that the insulating layer can readily be stripped off and at the same time the cutting assembly does not cut wires of the conducting component or, when the cable contains a light conductor, the cutting assembly does not damage the surface of the light conductor.

In an advantageous embodiment the rotational movement of the cutting assembly is achieved by a ring mount carrying the cutting assembly, wherein the ring mount is mounted in a ring mount bearing.

It has been found useful when the apparatus comprises a clamping assembly to clamp the cable at a fixed position inside the apparatus. Fixing the position of the cable inside the apparatus supports a reproducible process quality of the cutting process.

For the same purpose, namely the stabilization of the cable, the ring mount may comprise a counter bearing supporting the cable.

In one embodiment of the apparatus the control unit of the cutting assembly comprises an actuator to adjust the incision depth of the cutting tool.

According to a second aspect of the present disclosure a method for removing an insulating layer of a cable, which includes an electrical or light conductor and/or a screen as conducting components. The method is implemented by an apparatus according to the first aspect of the present disclosure. The method comprises
- detecting a distance between an outer surface of the insulating layer and the adjacent conducting component in a dynamic and spatially resolved manner around the circumference of the cable as a measuring tool rotates around the cable;
- dynamically controlling the adjustable cutting assembly while it rotates around the cable such that a cutting edge of a cutting tool cuts through the insulating layer and remains at a predefined distance from the conducting component without touching the conducting component.

The suggested method provides for the same advantages as the apparatus according to the first aspect of the present disclosure.

In one advantageous embodiment of the method detecting the distance between the outer surface of the insulating layer and the conducting component is performed by an ultrasonic depth measurement, an electric field measurement, a capacity measurement and/or photographic analysis. The method is not limited to a certain measurement technique to detect the distance. Thus, it is possible to choose for every application the most suitable measurement technique.

Advantageously the measurements and the photographic analysis are performed in a spatially resolved manner. Spatial resolution of the measurements is important for the dynamic adaption of the cutting tool.

To this end it has been found useful when detecting the distance between an outer surface of the insulating layer and the conducting component is performed by the sensor along the circumferential movement path of the cutting assembly and in front of the cutting edge of the cutting tool relative to the movement direction of the cutting assembly. In this way the sensor data are made available in time to adjust the cutting tool and prevent it from cutting into wires of a conducting component of the cable. At the same time the insulating layer is cut in deep enough to facilitate the stripping of the insulating layer.

In an advantageous embodiment of the method the cutting edge of the cutting tool arrives at a given circumferential position with a temporal delay after the sensor has detected the distance between the outer surface of the insulating layer and the adjacent conducting component enabling adjustment of the incision depth of the cutting tool to maintain a predefined distance from the adjacent conducting component at the given circumferential position. A proper coordination of the timing of the measurement data and the adaptation of the cutting tool is essential to achieve a good process quality.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1A: a schematic diagram of a shielded cable;
- Fig. 1B: a cross section of the shielded cable of Figure 1A;
- Fig. 1C: a cross section of a stranded conductor;
- Fig. 2: a perspective view of a sheath stripping apparatus according to the present disclosure;
- Figs. 3A-3C: detailed views of the apparatus of Figure 2;
- Fig. 4: another perspective view of the apparatus according to the present disclosure; and
- Fig. 5: a schematic flow diagram of the method according to the present disclosure.

In the figures the same or similar components are labelled with the same or similar reference signs.

### Detailed description

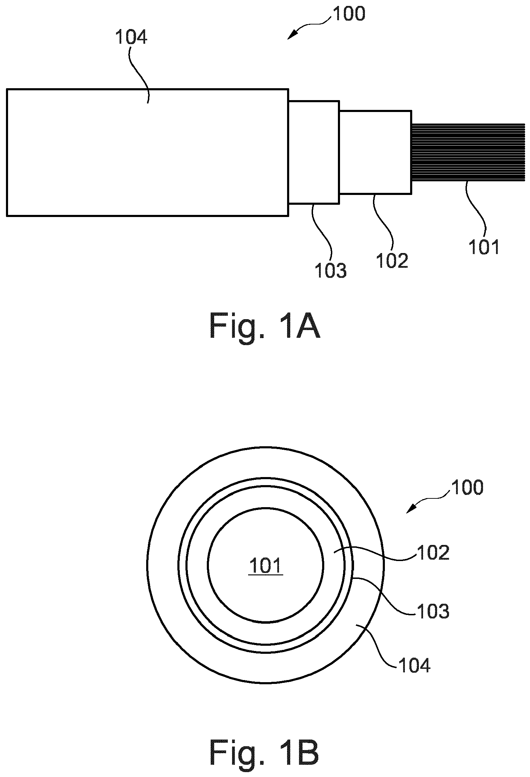

Figure 1A illustrates a shielded electric cable 100 with a conductor 101. In the embodiment shown in Figure 1A the conductor 101 is a stranded conductor. In other embodiments the conductor 101 is a wire. The conductor 101 Is enclosed by an inner insulator 102 that carries on its in a radial direction outer surface an electrically active screen 103 for shielding electric fields caused by high voltages applied to the conductor 101. This arrangement is protected by an insulating sheath 104 that surrounds the screen 103. In the following, the term "insulating layer" is used as a generic term for the inner insulator 102 and sheath 104. Likewise, the term "conducting component" is a used as a generic term for the conductor 101 and the screen 103. In this terminology for the sheath 104 the screen 103 represents an adjacent conducting component while for the inner insulator 102 the conductor 101 is the adjacent conducting component.

Figure 1B displays a cross section of the cable 100. In Figure 1B the conductor 101 is perfectly circular while the inner insulator 102, the screen 103 and the sheath 104 have a uniform thickness in circular direction. In reality, the cable 100 is not perfectly circular because a stranded conductor does not have a constant diameter and the inner insulation 102, the screen 103 and the sheath 104 do not have a constant thickness in circular direction.

If the sheath 104 and/or the inner insulation 102 is cut into with a cutting tool for stripping, the aforementioned geometric variations bear the risk that, on the one hand, wires of the screen 103 and/or the stranded conductor 101 are also cut through. On the other hand, there is a risk that the cutting assembly does not incise the sheath 104 and/or the inner insulation 102 deeply enough to enable proper stripping of the sheath 104 and/or the inner insulation 102. Both effects have a negative impact of the quality of the cable 100 and on connections made with the cable 100.

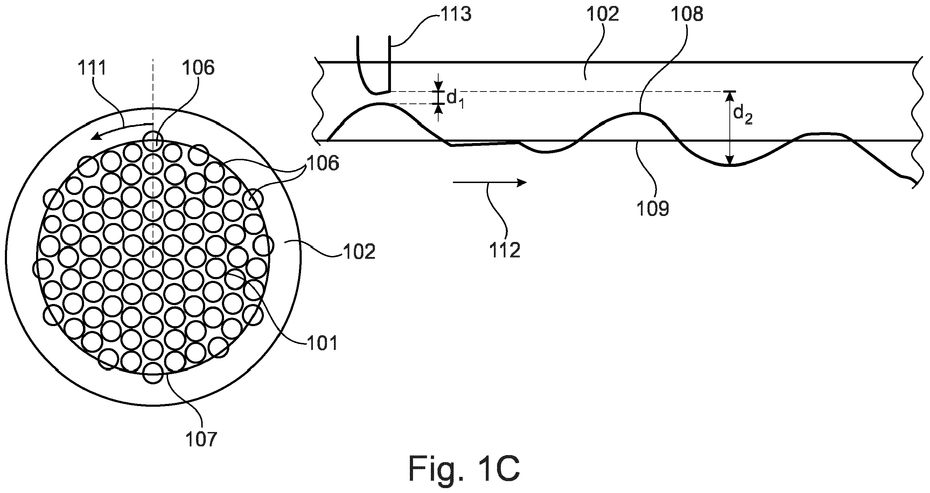

Figure 1C illustrates variations in diameter of stranded conductor 101. Individual strands 106 of the stranded conductor 101 extend above or fall below the circular line 107 corresponding to a perfect circular diameter. Consequently, the thickness of the inner insulator 102 varies as well. An un-wound envelope of the stranded conductor 101 is shown as a line 108 in comparison to a straight line 109 that represents the un-wound circle line 107. The unwinding direction of the envelope and the circle line 107 is indicated by arrows 111 and 112, respectively. A cutting edge 113 of a cutting tool which is adjusted at a fixed position cuts through the inner insulator 102 and leaves a certain remaining thickness of the inner insulator 102 intact because the cutting edge 113 shall not cut wires of the stranded conductor 101. As the diameter of the stranded conductor 101 varies, the remaining thickness of the inner insulator 102 varies as well. The remaining thickness varies for example in a range between d1 and d2 as shown in Figure 1C. While the remaining thickness d1 may be optimal for stripping off the inner insulator 102 from the stranded conductor 101, the remaining thickness d2 may be too large and prevents stripping of the insulator 102 with a clean tear-off edge. If on the contrary, the cutting edge 113 is adjusted such that the remaining thickness d2 is reduced to a value corresponding to the remaining thickness d1, then the cutting edge 113 will inevitably cut wires of at least some strands 106 of the stranded conductor 101. Both problems shall be avoided with a sheath stripping apparatus that is described in the following. Similar problems occur when the thickness of the inner insulator 102 and/or the sheath 104 vary. In case of cutting into the sheath 104, there is a risk of cutting some wires of the screen 103 as well.

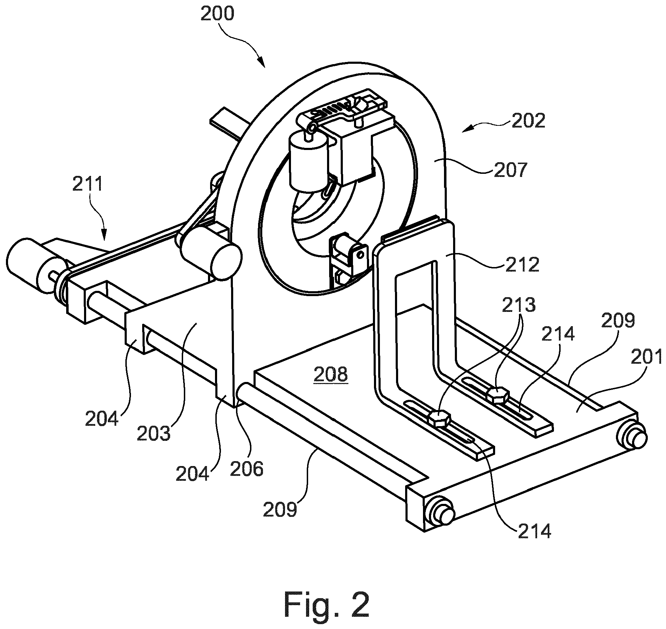

Figure 2 shows a perspective view of the stripping apparatus according to the present disclosure, denominated in the following briefly as apparatus 200. The apparatus 200 comprises a base plate 201. On the base plate 201 rests a ring mount bearing 202. The ring mount bearing 202 has essentially the form of an L, wherein the base 203 of the L slides on the surface of the base plate 201. The ring mount bearing 202 comprises four lugs 204 extending downwards in Figure 2. The lugs 204 have threaded holes 206. A vertical portion 207 of the L shaped ring mount is arranged vertically relative to a main surface 208 of the base plate 201.

A spindle 209 is mounted on each lateral side 210 of the base plate 201. The spindles 209 pass through the threaded holes 206 in the lugs 204 of the ring mount bearing. An electric belt drive 211 is apt for rotating the spindles 209 to effect a longitudinal feed of the ring mount bearing along the base plate 201. A stopper plate 212 is mounted on the base plate 201. The stopper plate 212 is fixed on to the base plate 201 by screws 213. The position of the stopper plate 212 is adjustable on the base plate 201 because the screws 213 pass through long-holes 214. The positions of the ring mount bearing 202, the stopper plate 212 enable the adjustment of a stripping length of a cable (not shown in Figure 2).

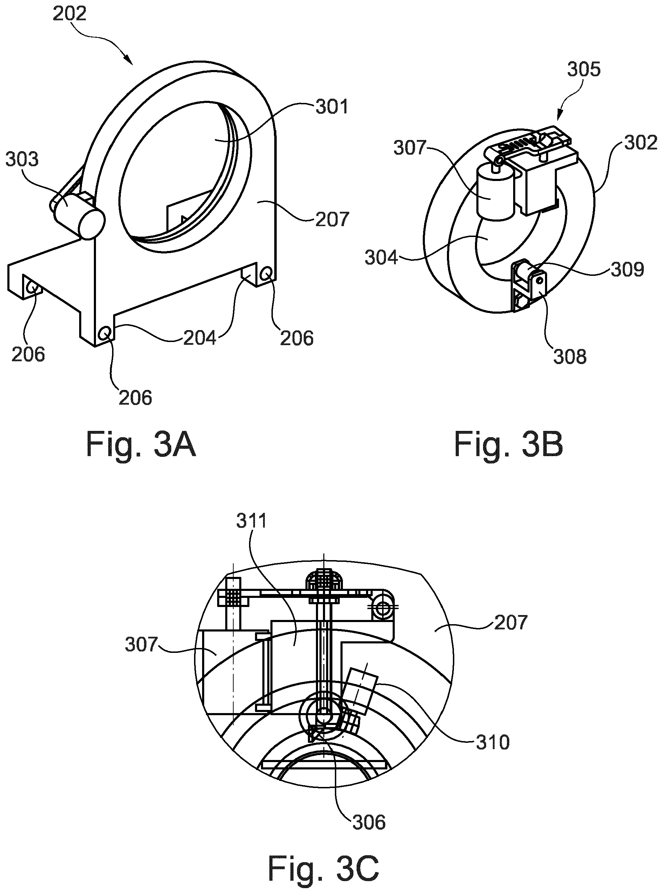

Figure 3A shows the ring mount bearing 202 isolated from the rest of the apparatus 200. The vertical portion 207 of the ring mount bearing 202 has a circular passage 301 for accommodating a ring mount 302 (Figure 3B). The belt drive 303 rotates the ring mount 302 shown in Figure 3B when it is mounted in the circular passage 301 of the ring mount bearing 202. The ring mount 302 has a cable passage 304 allowing the passage of the cable when the apparatus 200 is in operation The ring mount 302 carries a cutting assembly 305. The cutting assembly 305 is shown in greater detail in Figure 3C and comprises a cutting tool 306, for instance a knife, that is adjustable in radial direction of the ring mount 302. The adjustment of the cutting tool 306 is executed by an actuator 307 to adjust how deep the cutting tool 306 cuts into a sheath 104 or inner insulator 102 of the cable 100 (not shown in Figure 3A).

In operation of the apparatus 200 the cable to be stripped rests on a counter bearing 308 with a roller 309 (Figure 3B). The counter bearing 308 assures that the position of the cable is controlled when the ring mount 302 rotates around the cable 100. A sensor 310 is mounted next to the cutting assembly 305 and measures the thickness of the sheath 104 or the inner insulator 102 of the cable 100 in a spatially resolved manner, which will be explained in more detail further below. In the sense of rotation of the ring mount 202, the sensor 310 is arranged ahead of the cutting tool 306. That is, the sensor 310 passes a given circumferential position around the cable 100 before the cutting tool 306 arrives at the same circumferential position when the ring mount 302 rotates around the cable 100.

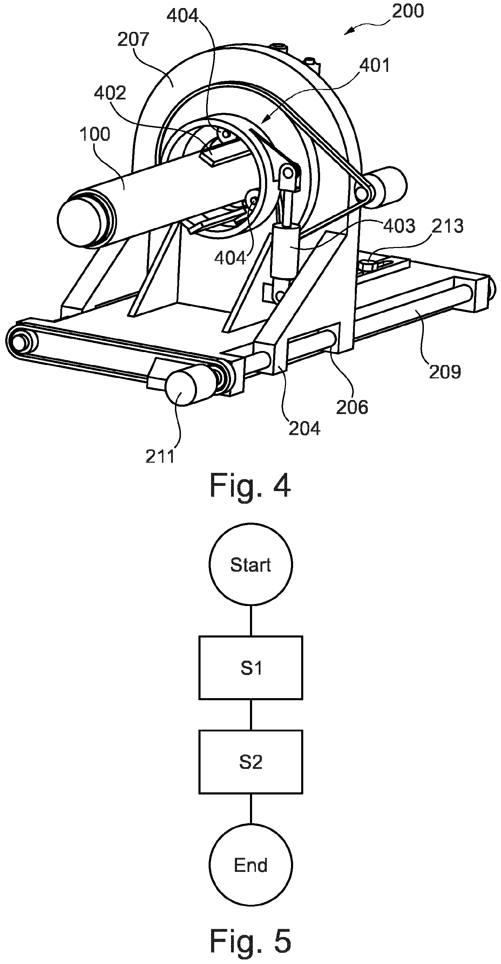

Figure 4 is another perspective view of the apparatus 200 and shows on the rear side of the ring mount bearing a clamping assembly 401 comprising three clamps 402 that can be actuated by an actuator 403 to clamp or release the cable 100 in a fixed position. Figure 4 further displays rollers 404 that are connected with the ring mount 302. The clamps 401 and the rollers 404 center the cable 100 in the passage 304 of the ring mount 302.

The apparatus 200 functions in the following way. Firstly, the position of the ring mount bearing 202 and/or the stopper plate 212 is adjusted to determine the stripping length of the sheath 104. For stripping the sheath 104 off from the cable 100, the cable is fed into the apparatus 200 through the cable passage 304 until a front end of the cable 100 abuts against the stopper 212. Then the clamps 402 are actuated to fix the cable 100 in this position. The sensor 310 measures the thickness of the sheath and the cutting tool 306 is dynamically adjusted in radial direction to cut controlled into the sheath 104. The cutting tool 306 leaves a predetermined thickness of the sheath 104 intact. Once the ring mount 302 and the cutting tool 306 have performed a full circle around the cable 100, the cutting assembly is withdrawn from the cable and the clamps 402 are released. Then the cable is removed from the apparatus 200 and the portion of the sheath 104 that is cut in is stripped off. The stripping can be performed manually or in another apparatus that is not part of the present disclosure.

The sensor 310 measures the thickness of the sheath 104 or the insulator 102 by a spatially resolved ultrasonic measurement. The measurement data are transmitted to the control unit 311 which uses the measurement data of the sensor 310 to control the incision depth of the cutting tool 306 into the sheath 104. Since the sensor 310 measures the thickness at a given circumferential position on the cable before the cutting tool 306 arrives at the same rotational position the incision depth of the cutting tool 306 can be controlled such that predetermined remaining thickness of the sheath 104 is maintained around the cable 100 such that the cutting tool does not cut into the screen 103 and still cuts deep enough that the sheath 104 can be stripped easily even when the thickness of the sheath 104, screen 103 and/or inner insulator 102 vary in circumferential direction. The same is true when the diameter of the stranded conductor 101 varies.

In an alternative embodiment the cutting tool 306 is used to perform a capacity measurement by applying a measurement voltage between the cutting tool 306 and the conductor 101. The measured capacity is a function of the distance between the cutting tool 306 and to the stranded conductor 101 and hence it is a function of the remaining thickness of the sheath 104. The rotational speed of the ring mount 302 and the speed of adjustment of the incision depth of the cutting tool 306 are coordinated to assure that the radial position of the cutting tool 306 is adjusted fast enough and does not cut into wires of the screen 103 and the remaining thickness of the sheath 104 is kept in a range that allows for proper stripping of the cable 100.

Even though the functioning of the apparatus 200 has been described in connection with stripping the sheath of the cable, the description is also applicable in a corresponding manner for stripping the inner insulator 102 of the cable 100. The same applies when cables are stripped that have a plurality of inner insulators. Likewise, the apparatus 200 and the method for stripping a sheath is also applicable to optical cables including a light conductor.

In another embodiment of the apparatus 200 photographic data of the front end of the cable 100 are used for determining control data for the adjustment of the incision depth of the cutting tool 306. This embodiment is not shown in the drawing. I.e. a camera captures a front end of the cable and determines the thickness of the sheath 100 for and/or inner insulation 102. The incision depth of the cutting tool is adjusted accordingly.

Figure 5 illustrates a flow diagram of the method according to the invention for removing a sheath and/or an inner insulation of the cable. In a first step S1 the method comprises detecting a distance between an outer surface of the sheath 104 and/or the inner insulator 102 and the conductor 101 in a dynamic and spatially resolved manner around the circumference of the cable 100 as a measuring tool rotates around the cable 100. In a following step S2 the incision depth of the cutting tool 306 is dynamically controlled while the cutting assembly 305 rotates around the cable 100 such that a cutting edge of the cutting tool, e.g. a knife, cuts through the sheath 104 and/or inner insulator 102 and remains at a predefined distance from the screen 103 or the conductor 101.

In the claims, the word "comprising" does not exclude other elements or steps, and the indefinite article "a" does not exclude a plurality.

**List of reference signs**

| | | | |
|---|---|---|---|
| 100 | Cable | 301 | Circular passage |
| 101 | Stranded conductor | 302 | Ring mount |
| 102 | Inner insulator | 303 | Belt drive |
| 103 | Screen | 304 | Cable passage |
| 104 | Sheath | 305 | Cutting assembly |
| | | 306 | Cutting tool |
| 106 | Strand | 307 | Actuator |
| 107 | Circular line | 308 | Counter bearing |
| 108 | Line | 309 | Roller |
| 109 | Straight line | 310 | Sensor |
| | | 311 | Control unit |
| 111,112 | Arrow | | |
| 113 | Cutting edge | 401 | Clamping assembly |
| | | 402 | Clamp |
| 200 | Sheath stripping apparatus | 403 | Actuator |
| 201 | Base plate | 404 | Roller |
| 202 | Ring mount bearing | | |
| 203 | Base | | |
| 204 | Lugs | | |
| | | | |
| 206 | Threaded holes | | |
| 207 | Vertical portion | | |
| 208 | Main surface | | |
| 209 | Spindle | | |
| 210 | Lateral side of base plate | | |
| 211 | Belt drive | | |
| 212 | Stopper plate | | |
| 213 | Screws | | |
| 214 | Long-holes | | |

## Claims

1. Apparatus comprising an adjustable cutting assembly (305) rotating around a cable (100) to perform a circumferential cut into an insulating layer (102,104), wherein the cutting assembly (305) comprises a control unit (311) with a sensor (310), an actuator (307) and a cutting tool (306), wherein the control unit controls an incision depth of the cutting tool (306) into the insulating layer **characterized in that** a sensor (310) detects a distance between an outer surface of the insulating layer (102,104) and an adjacent conducting component (101,103) and that the control unit (311) utilizes the sensor data describing the measured distance for dynamically adjusting the incision depth of the cutting tool (306) while the cutting assembly (305) rotates around the cable (100).

2. Apparatus according to claim 1, comprising a ring mount (302) carrying the cutting assembly (305), wherein the ring mount is mounted in a ring mount bearing (202).

3. Apparatus according to claim 1 or 2, comprising a clamping assembly (401) to clamp the cable (100) at a fixed position inside the apparatus.

4. Apparatus according to one of the preceding claims, wherein the ring mount (302) comprises a counter bearing (308) supporting the cable.

5. Method for removing an insulating layer (102,104) of a cable (100), which includes an electrical or light conductor (101) and/or screen (103) as conducting components, wherein the method is implemented by an apparatus comprising a cutting assembly (305) with an adjustable cutting tool (306) rotating around the cable to perform a circumferential cut into the insulating layer (102,104), wherein the apparatus further comprises a control unit (311) for controlling an incision depth of the cutting tool (306) into the insulating layer (102,104), the method comprising
- detecting a distance between an outer surface of the insulating layer (102,104) and the adjacent conducting component (101,103) in a dynamic and spatially resolved manner around the circumference of the cable (100) as a sensor (310) rotates around the cable;
- dynamically controlling the adjustable cutting tool (306) while it rotates around the cable such that the cutting tool (306) cuts through the insulating layer (102,104) and remains at a predefined distance from the conducting component (101,103).

6. Method according to claim 5, wherein detecting the distance between the outer surface of the insulating layer (102,104) and the conducting component (101,103) is performed by an ultrasonic depth measurement, an electric field measurement, a capacity measurement and/or the photographic analysis.

7. Method according to claim 6, wherein the measurements and the photographic analysis are performed in a spatially resolved manner.

8. Method according to one of claims 5 to 7, wherein detecting the distance between an outer surface of the insulating layer (102,104) and the conducting component (101,103) is performed by the sensor (310) along a circumferential movement path of the cutting tool (306) and in front of cutting edge of the cutting tool (306) relative to the movement direction of the cutting assembly (305).

9. Method according to claim 8, wherein the cutting edge of the cutting tool (306) arrives at a given circumferential position with a temporal delay after the sensor (310) has detected the distance between the outer surface of the insulating layer (102,104) and the adjacent conducting component (101,103) enabling adjustment of the incision depth of the cutting tool (306) to maintain the predefined distance from the adjacent conducting component (101,103) at the given circumferential position.

## Amended claims

### Amended claims in accordance with Rule 137(2) EPC.

1. Apparatus comprising an adjustable cutting assembly (305) rotating around a cable (100) to perform a circumferential cut into an insulating layer (102,104), wherein the cutting assembly (305) comprises a control unit (311) with a sensor (310), an actuator (307) and a cutting tool (306), wherein the control unit controls an incision depth of the cutting tool (306) into the insulating layer **characterized in that** a sensor (310) is configured to measuret a distance between an outer surface of the insulating layer (102,104) and an adjacent conducting component (101,103) and that the control unit (311) is configured to utilize the sensor data describing the measured distance for dynamically adjusting the incision depth of the cutting tool (306) to maintain a predefined distance from the adjacent conducting component (101,103) [page 2, lines 23-25; claim 9] while the cutting assembly (305) rotates around the cable (100).

2. Apparatus according to claim 1, comprising a ring mount (302) carrying the cutting assembly (305), wherein the ring mount is mounted in a ring mount bearing (202).

3. Apparatus according to claim 1 or 2, comprising a clamping assembly (401) to clamp the cable (100) at a fixed position inside the apparatus.

4. Apparatus according to one of the preceding claims, wherein the ring mount (302) comprises a counter bearing (308) supporting the cable.

5. Method for removing an insulating layer (102,104) of a cable (100), which includes an electrical or light conductor (101) and/or screen (103) as conducting components, wherein the method is implemented by an apparatus comprising a cutting assembly (305) with an adjustable cutting tool (306) rotating around the cable to perform a circumferential cut into the insulating layer (102,104), wherein the apparatus further comprises a control unit (311) for controlling an incision depth of the cutting tool (306) into the insulating layer (102,104), the method comprising
- detecting a distance between an outer surface of the insulating layer (102,104) and the adjacent conducting component (101,103) in a dynamic and spatially resolved manner around the circumference of the cable (100) as a sensor (310) rotates around the cable;
- dynamically controlling the adjustable cutting tool (306) while it rotates around the cable such that the cutting tool (306) cuts through the insulating layer (102,104) and remains at a predefined distance from the conducting component (101,103).

6. Method according to claim 5, wherein detecting the distance between the outer surface of the insulating layer (102,104) and the conducting component (101,103) is performed by an ultrasonic depth measurement, an electric field measurement, a capacity measurement and/or the photographic analysis.

7. Method according to claim 6, wherein the measurements and the photographic analysis are performed in a spatially resolved manner.

8. Method according to one of claims 5 to 7, wherein detecting the distance between an outer surface of the insulating layer (102,104) and the conducting component (101,103) is performed by the sensor (310) along a circumferential movement path of the cutting tool (306) and in front of cutting edge of the cutting tool (306) relative to the movement direction of the cutting assembly (305).

9. Method according to claim 8, wherein the cutting edge of the cutting tool (306) arrives at a given circumferential position with a temporal delay after the sensor (310) has detected the distance between the outer surface of the insulating layer (102,104) and the adjacent conducting component (101,103) enabling adjustment of the incision depth of the cutting tool (306) to maintain the predefined distance from the adjacent conducting component (101,103) at the given circumferential position.
